# EUROPEAN PATENT APPLICATION

(11) **EP 4 160 293 A1**
(43) Date of publication of application: **05.04.2023**
(21) Application number: 22196789.6
(22) Date of filing: 21.09.2022
(51) Int. Cl.: G02B 7/00, G02B 7/02

(54) **CONICAL BALL CONE BEARING**

(30) Priority: 30.09.2021 US 202163250666 P
(71) Applicant: Thorlabs Inc., Newton, New Jersey 07860 (US)
(72) Inventor: D'Alessio, Brett, c/o Thorlabs, Inc., 56 Sparta Avenue, Newton, New Jersey, USA (US)
(74) Representative: Grättinger Möhring von Poschinger Patentanwälte Partnerschaft mbB

(57) **Abstract**

The conical ball cone bearing is a high load and reduced pressure kinematic or fixed thrust bearing that allows for a greater load carrying capacity with a reduced contact pressure to be obtained in a smaller package. This bearing maximizes the contact radius over the needed angular translation to reduce the contact pressure. This has two advantages in a kinematic system. First, the reduced contact pressure increases the maximum load the bearing can hold prior to surface failure. Second, the reduced contact pressure reduces the friction on the kinematic contacts, allowing the kinematic system to move more freely and operate with a smoother movement and improved stability.

## Description

### CROSS REFERENCE TO RELATED APPLICATIONS

This application claims the benefit of U.S. Provisional Patent Application No. 63/250,666 filed on September 30, 2021. The disclosure of U.S. Provisional Patent Application 63/250,666 is hereby incorporated by reference.

### FIELD OF THE INVENTION

The present invention relates to kinematic bearings for machines, and more specifically to a conical ball cone bearing.

### BACKGROUND

In a kinematic system, bearings are used to reduce friction on kinematic surfaces in order to allow the kinematic system to move smoothly and freely. However, the kinematic bearing products currently available in the industry have a poor surface toughness and wear out very quickly.

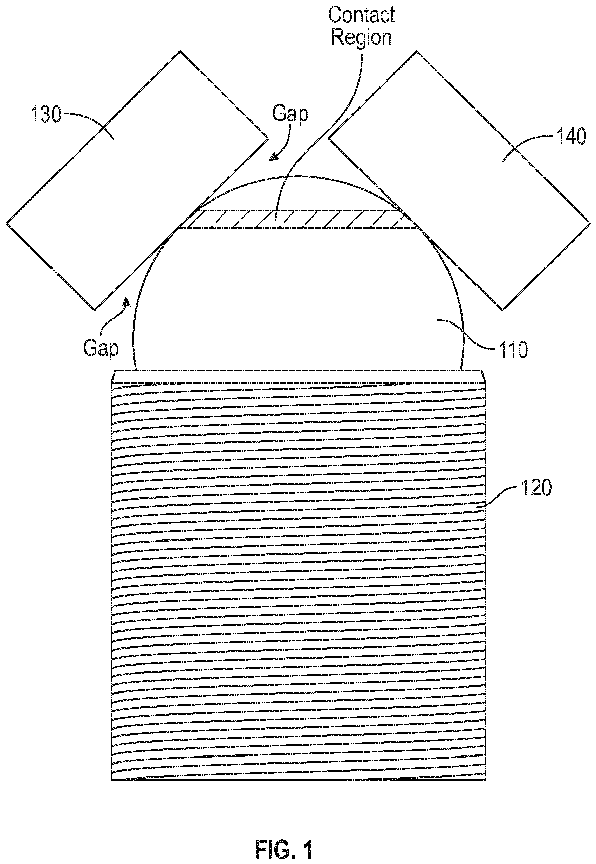

A typical kinematic bearing or position adjustment bearing has a ball bearing contact tip that fits into the head of the adjuster screw. FIG. 1 shows a typical ball bearing contact tip mounted on top of an adjuster. As can be seen from FIG. 1, there are large gaps at the edges between the ball and the bearing surface the ball is sitting on. The ball is typically the same size or smaller than the adjuster screw. On existing designs, the designer typical places a ball into a v-groove on the head of the adjuster screw. Sometimes the ball is machined into the tip of the screw, but these screws are typically of poor quality because the ball tip is made from the same soft metal as the adjuster screw, and the ball is the same diameter or smaller than the adjuster screw. The diameter of the ball affects the contact pressure on the surface that the ball makes contact with. The pressure affects the load that the bearing can bear and the frictional force between the ball and the contact surface. Typically in a kinematic system a larger ball would be used to reduce the contact pressure resulting in both a higher load rating and less frictional force between the ball and the contact surface. The problem here is that the larger balls require a much larger system to support it.

Existing bearing designs are not able to fit a large enough ball to achieve the needed minimum contact pressure without making the bearing much larger. The problem with the largest ball is that it needs a larger adjuster and also a larger mount. All this additional product mass results in additional load forces to the product, requiring the ball to be even larger.

All the current similar designs use spherical surfaces as shown in FIG. 5. A design shown in FIG. 6 uses tapered roller bearings, but it does not allow for angular translation. A design shown in FIG. 7 uses spherical roller bearings that allow for small amounts of angular translation, but they are very complex to manufacture and very expensive. A design shown in FIG. 8 uses self-aligning ball bearings that allow for small amounts of angular translation, but they are very complex to manufacture and very expensive.

Therefore, there is a long-felt need for a smaller kinematic bearing that fits within an available space of a specific mechanical component and has large load carrying capacity but does not have above discussed shortcomings.

### SUMMARY

An embodiment of the present disclosure provides a conical ball cone bearing, comprising: an adjuster and a conical ball cone bearing contact tip mounted on an end of the adjuster; wherein a surface of the conical ball cone bearing contact tip comprises a contact region located between the base and apex of the conical ball cone bearing contact tip; wherein the contact region is configured to make contact with a corresponding contact surface.

The conical ball cone bearing according to an embodiment maximizes the contact radius of the conical ball cone bearing contact tip over the needed angular translation and within a predetermined available space to reduce the contact pressure.

### BRIEF DESCRIPTION OF THE DRAWINGS

FIG. 1 shows a bearing ball mounted on the top of an adjuster.

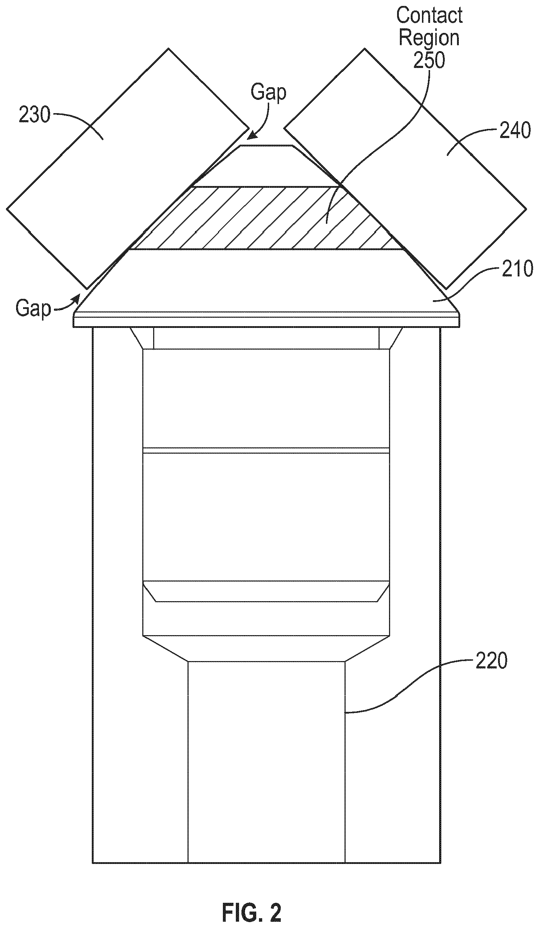

FIG. 2 shows a conical ball cone bearing according to an embodiment.

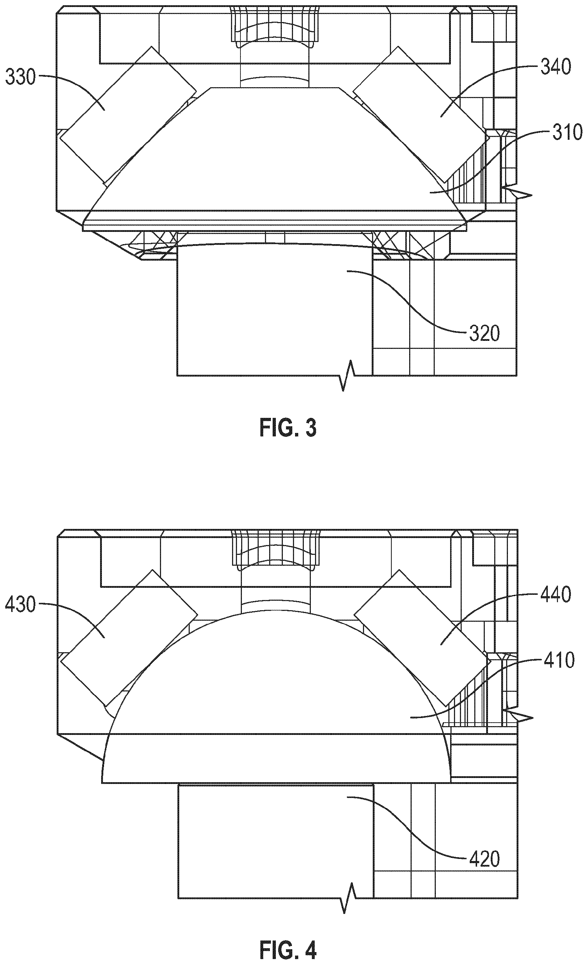

FIG. 3 shows a conical ball cone bearing according to an embodiment.
FIG. 4 shows an overhanging ball bearing mounted on the top of an adjuster according to an embodiment.

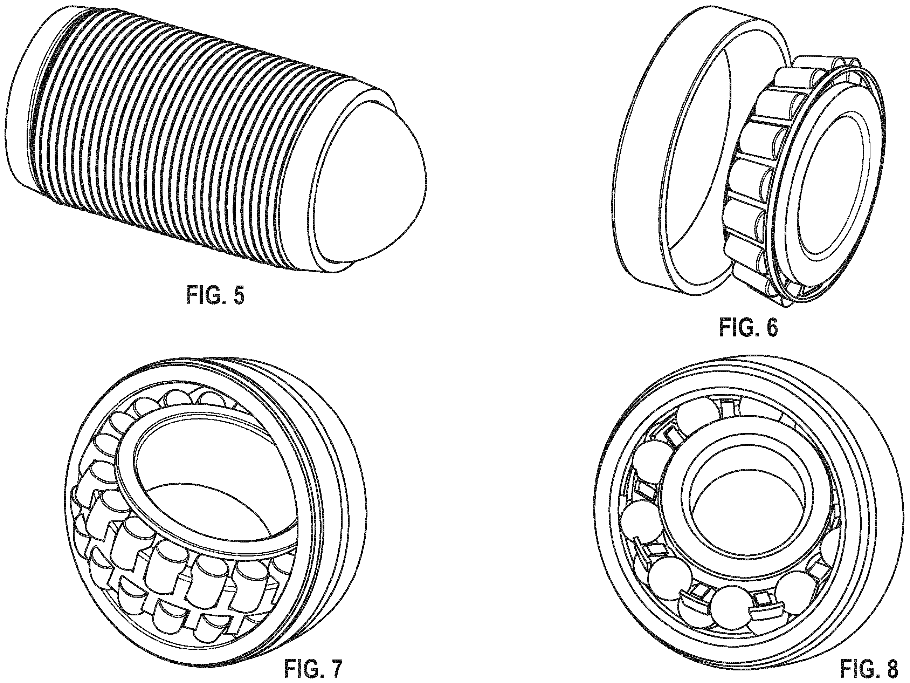

FIG. 5 shows a current round surface bearing design.
FIG. 6 shows a current tapered roller bearing design.
FIG. 7 shows a current spherical roller bearing design.
FIG. 8 shows a current self-aligning ball bearing design.

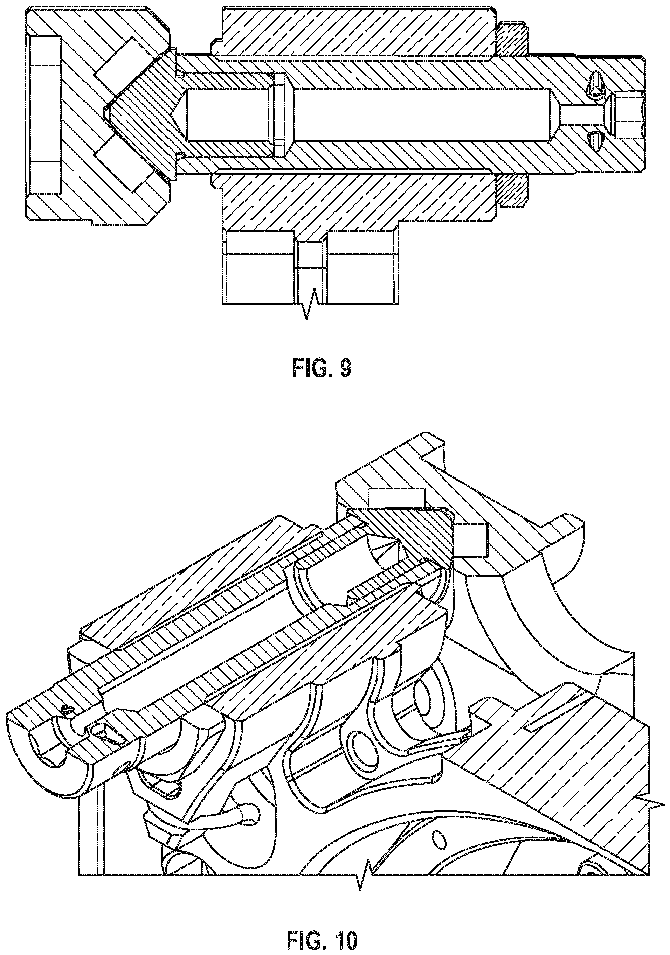

FIG. 9 shows a cross-sectional view of a conical ball cone bearing installed in a machine according to an embodiment.
FIG. 10 shows a cut-off view of a conical ball cone bearing installed in a machine according to an embodiment.

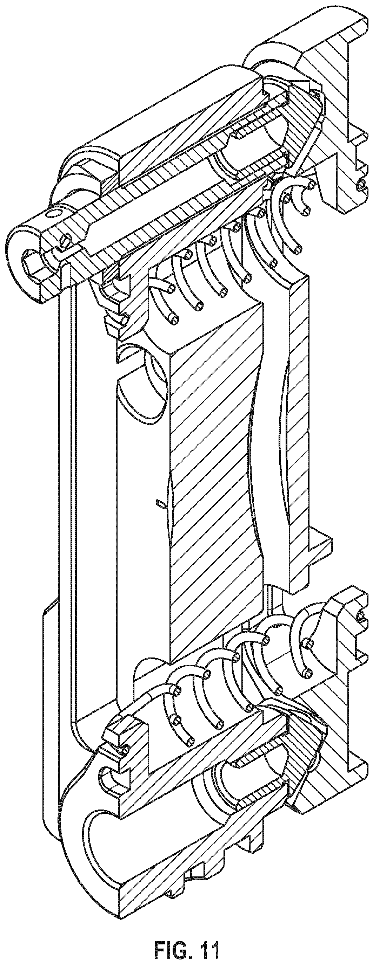

FIG. 11 shows a cut-off view of multiple conical ball cone bearings installed in multiple locations of a machine according to an embodiment.

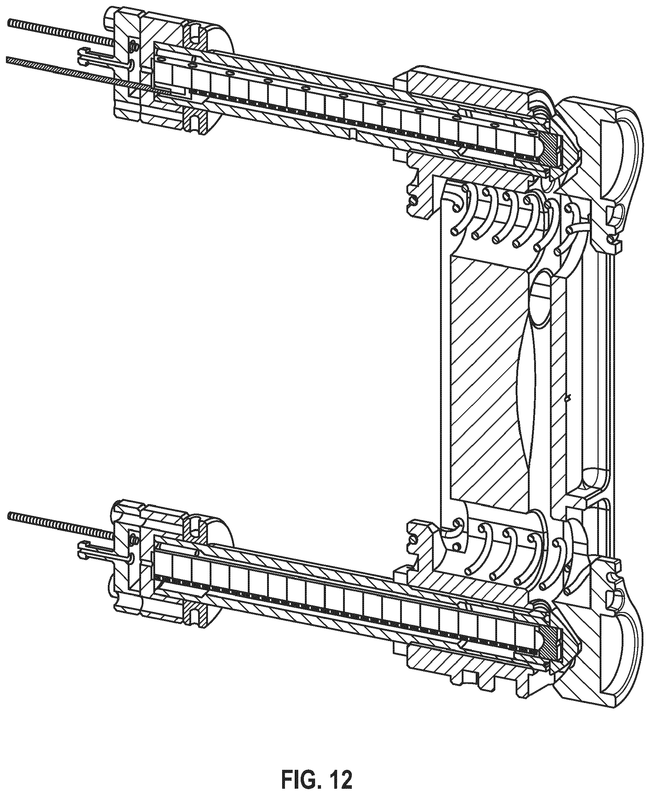

FIG. 12 shows a cut-off view of multiple conical ball cone bearings on piezoelectric actuators according to an embodiment.

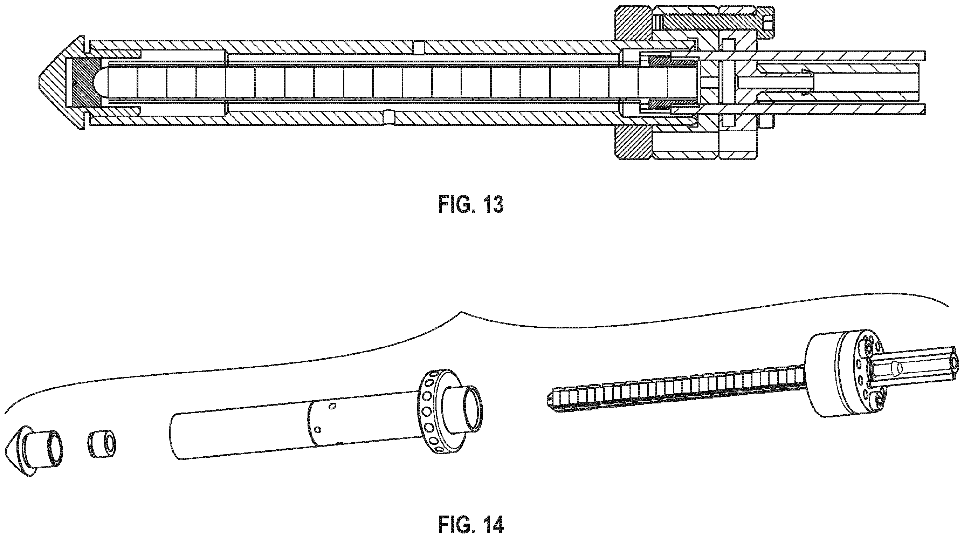

FIG. 13 shows a cross-sectional view of a conical ball cone bearing on a piezoelectric actuator according to an embodiment.
FIG. 14 shows an exploded view of a conical ball cone bearing on a piezoelectric actuator according to an embodiment.

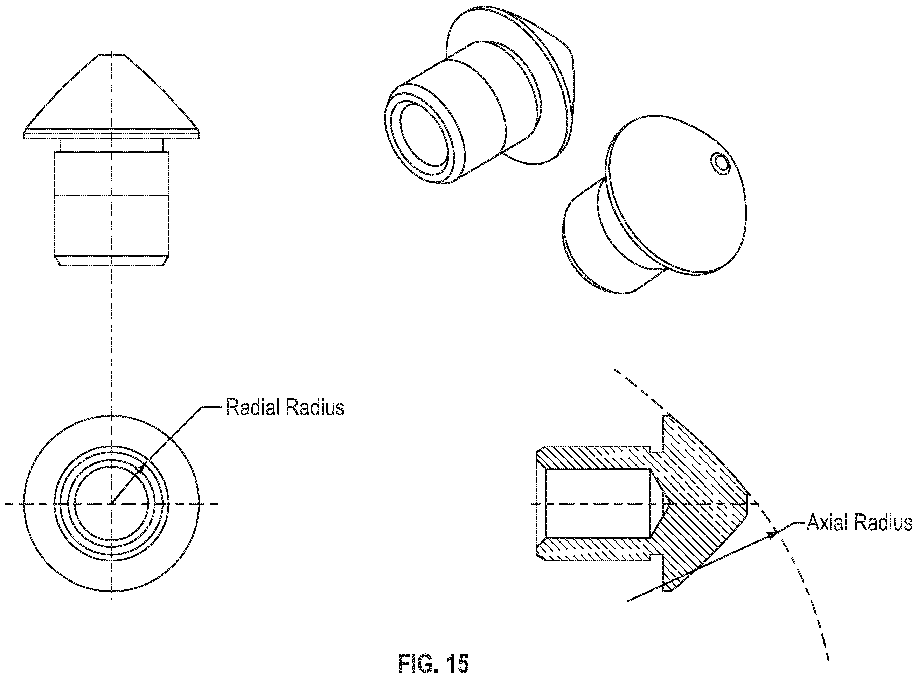

FIG. 15 shows the perspective, front, top and cross-sectional views of a conical ball cone bearing contact tip according to an embodiment.

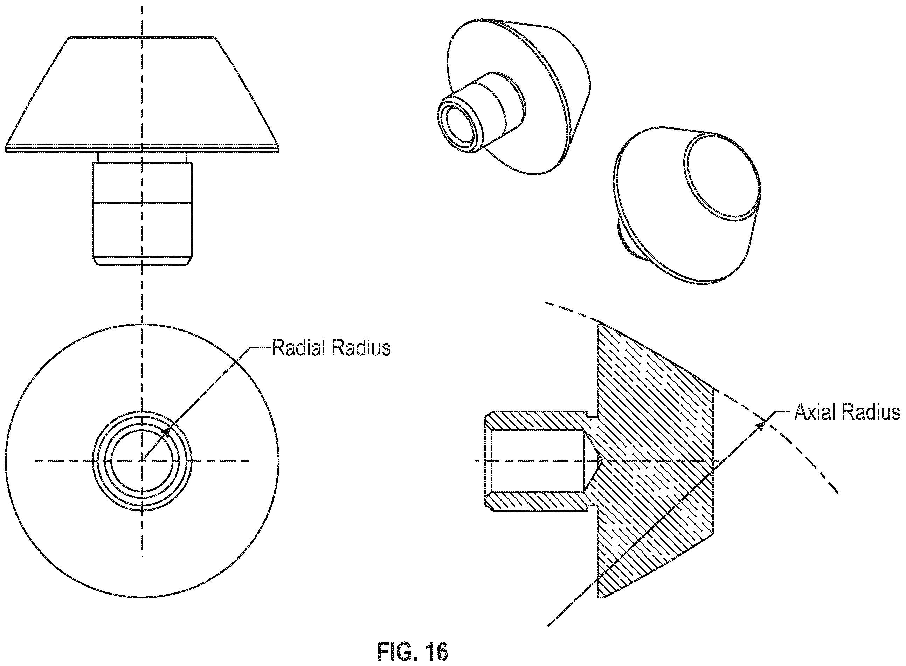

FIG. 16 shows the perspective, front, top and cross-sectional views of a conical ball cone bearing contact tip according to an embodiment.

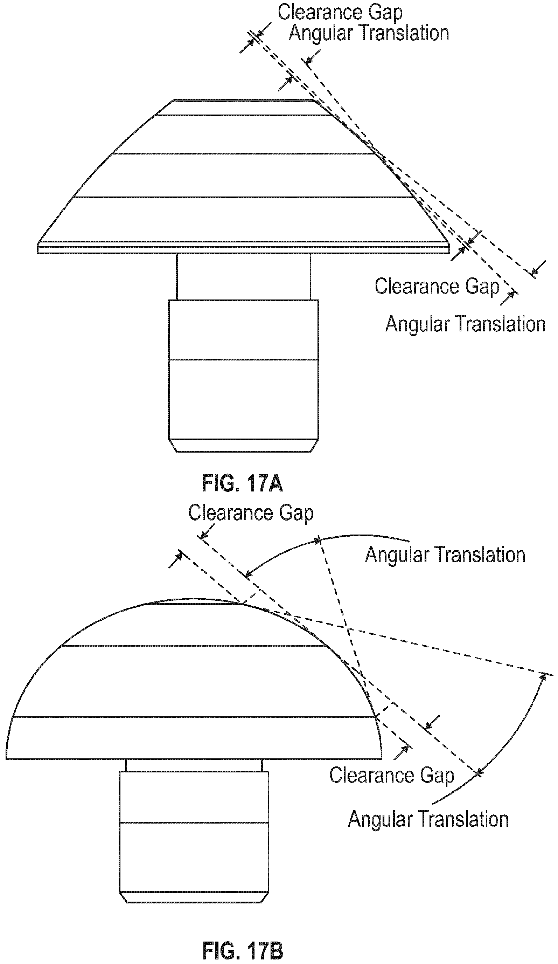

FIG. 17A shows the clearance gap and angular translation range of a conical ball cone bearing contact tips according to an embodiment.
FIG. 17B shows the clearance gap and angular translation range of an overhanging ball bearing contact tips.

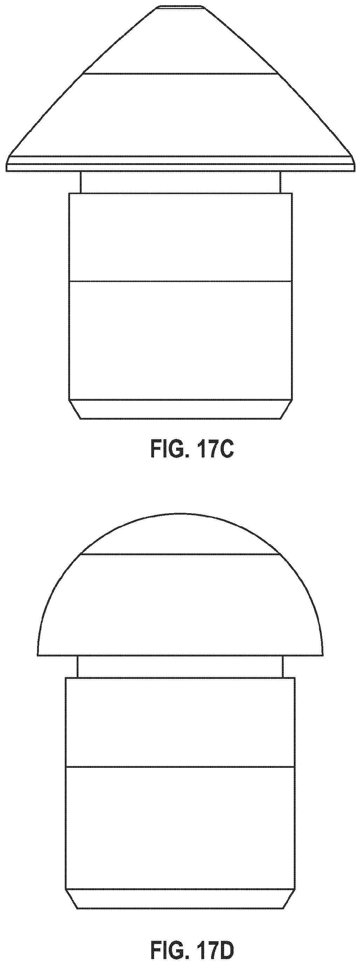

FIG. 17C shows a conical ball cone bearing contact tips according to an embodiment.
FIG. 17D shows a standard ball bearing contact tips.

### DETAILED DESCRIPTION OF THE PREFERRED EMBODIMENTS

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

This disclosure describes the best mode or modes of practicing the invention as presently contemplated. This description is not intended to be understood in a limiting sense, but provides an example of the invention presented solely for illustrative purposes by reference to the accompanying drawings to advise one of ordinary skill in the art of the advantages and construction of the invention. In the various views of the drawings, like reference characters designate like or similar parts.

The conical ball cone bearing according to an embodiment is a high load and reduced pressure kinematic or fixed thrust bearing that allows for a greater load carrying capacity with a reduced contact pressure to be obtained in a smaller package. This bearing maximizes the contact radius over the needed angular translation to reduce the contact pressure. The reduced contact pressure has two advantages in a kinematic system. First, the reduced contact pressure increases the maximum load the bearing can hold prior to surface failure. Second, the reduced contact pressure reduces the friction on the kinematic contacts, allowing the kinematic system to move more freely and operate with a smoother movement and improved stability.

FIG. 1 shows an existing typical bearing ball 110 (e.g., a ½" OD hardened and polished 440C bearing ball) mounted on the top of an adjuster 120 (e.g., a 9/16" OD fine adjuster screw), making contact with two contact surfaces 130, 140 (e.g., two 3/8" OD sapphire mirrors). However, this design has the disadvantages as discussed above.

As stated above the lower contact pressure has a direct effect on the load carrying capacity of the bearing and the friction at the kinematic contacts. In many mechanical products it would not have been possible to meet the required bearing load, adjuster smoothness of movement and beam pointing stability requirements without using an embodiment according to the present invention.

Embodiments of the present invention are designed to meet the following long-felt needs:
- The need to hold a larger optic.
- The need to carry higher payload and higher forces on the bearing surfaces.
- The need to keep the product footprint as small as possible.
- The need to keep the product mass as small as possible.
- The need to keep the contact pressures as small as possible, to improve product beam pointing stability and adjuster feel.
- The need to keep the contact pressures as small as possible, to increase load caring capacity.
- The need to keep the contact pressures as small as possible, to reduce friction.
- The need to keep the contact pressures as small as possible, to reduce bearing surface wear.
- The need to keep the contact pressures as small as possible, to prevent bearing surface failure.
- The need to isolate the adjuster torque from the bearing surface to eliminate any bearing surface wear.
- The need to isolate the adjuster torque from the bearing surface to eliminate any adjuster screw torque transfer to the kinematic contacts.
- The need to product the adjuster screw from the best material properties needed for the best screw contact surfaces.
- The need to product the bearing from the best material properties needed for the best bearing contact surfaces.

FIG. 2 shows a conical ball cone bearing according to an embodiment. A conical ball cone bearing contact tip 210 (e.g., a ½" radial diameter by 3" axial diameter, hardened and polished 440C conical ball cone bearing contact tip) is mounted on the top of an adjuster 220 (e.g., a 9/16" OD fine adjuster screw), making contact with two contact surfaces 230, 240 (e.g., two 3/8" OD sapphire mirrors). FIG. 15 shows the engineering drawings of this conical ball cone bearing contact tip. With the example dimensions, the ball bearing shown in FIG. 1 and the conical ball cone bearing shown in FIG. 2 are interchangeable, but the conical ball cone bearing shown in FIG. 2 has significantly less contact pressure than the typical industry standard design shown in FIG. 1.

The conical ball cone bearing according to an embodiment allows lower contact pressures to be achieved in a much smaller package. FIG. 2 shows a conical ball cone head 210 mounted on top of an adjuster 220 according to an embodiment. Compare to FIG. 1, the bearing shown in FIG. 2, has smaller gaps at the edges between the conical ball cone head and the bearing surface, and the contact region 250 has a wider width. The conical ball cone bearing according to an embodiment can hold higher loads and have less friction in the movement. This results in a smaller overall product package and improved long term beam pointing stability.

FIG. 3 shows a conical ball cone bearing according to another embodiment. A conical ball cone bearing contact tip 310 (e.g., a 1" radial diameter x 3" axial diameter hardened and polished 440C conical ball cone bearing contact tip) mounted on the top of an adjuster 320 (e.g., a 9/16" OD fine adjuster screw), making contact with two contact surfaces 330, 340 (e.g., two 3/8" OD sapphire mirrors). FIG. 16 shows the engineering drawings of this conical ball cone bearing contact tip. The two components shown in FIGS. 1 and 3 both fit into the same product footprint, but the embodiment shown in FIG. 3 is wider (in the example dimensions, 1/2" wider). The conical ball cone bearing shown in FIG. 3 has significantly less contact pressure than the typical industry standard design as shown in FIG. 1.

A unique and inventive feature of an embodiment of the present invention is that the bearing contact surface radius is maximized to achieve the lowest Hertzian contact stress within the available area. This is achieved by expanding the values of the curved bearing surface to increase the maximum axial radius and cutting away the unused bearing surface above and/or below the contact surface to maximize the radial radius. This results in a bearing that sits within the diameter of the adjuster (see, for example, FIG. 2) or for higher loads can extend beyond the diameter of the adjuster (see, for example, FIGS. 3 and 4). There is a mathematical correlation between the maximum achievable angular translation and the lowest contact pressure. The greatest reduction in surface pressure will be achieved when the bearing clearance is minimized to just what is needed to achieve the needed angular translation. This can be seen by comparing the bearing clearance gap in FIG. 1 versus FIG. 2 or the bearing clearance gap in FIG. 3 versus FIG. 4. FIGS. 17A - 17D provide specific examples to illustrate the differences between conical ball cone bearing designs and existing ball bearing designs. In FIG. 17A, a conical ball cone bearing according to an embodiment has a clearance gap of 0.008 inches and 12 degrees angular translation range. In FIG. 17B, a standard ball bearing has a clearance gap of 0.067 inches and 60 degrees angular translation range. Similar differences in clearance gap and angular translation range apply to respective designs shown in FIGS. 17C and 17D. If the bearing surface area used consumes the entire bearing surface, then the maximum contact pressure reduction has been achieved. Another advantage of an embodiment of the present invention is that it is easy to manufacture, e.g., by a single machine turning operation.

To illustrate the advantage of the embodiments of the present invention over existing designs, respective results of finite element analysis (FEA) on stress and contact pressure are summarized below:
- For contact pressure of 100 lbs. on the conical cone bearing of FIG. 17A, the maximum stress is 530 psi and the maximum contact pressure is 1247 psi.
- For contact pressure of 100 lbs. on the ball bearing of FIG. 17B, the maximum stress is 655 psi and the maximum contact pressure is 1431 psi.
- For contact pressure of 100 lbs. on the conical cone bearing of FIG. 17C, the maximum stress is 637 psi and the maximum contact pressure is 1359 psi.
- For contact pressure of 100 lbs. on the ball bearing of FIG. 17D, the maximum stress is 811 psi and the maximum contact pressure is 1628 psi.

From the above FEA data, it can be seen that the performance of the conical cone bearings is superior over existing ball bearing designs:
- Comparing the conical cone bearing of FIG. 17A with the overhanging ball bearing of FIG. 17B, the embodiment of FIG. 17A provides a decrease of (655 - 530)/655 = 19.1% in stress and a decrease of (1431 - 1247)/1431 = 12.9% in contact pressure.
- Comparing the conical cone bearing of FIG. 17A with the ball bearing of FIG. 17D, the embodiment of FIG. 17A provides a decrease of (811 - 530)/811 = 34.6% in stress and a decrease of (1628 - 1247)/1628 = 23.4% in contact pressure.
- Comparing the conical cone bearing of FIG. 17C with the overhanging ball bearing of FIG. 17B, the embodiment of FIG. 17C provides a decrease of (655 - 637)/655 = 2.7% in stress and a decrease of (1431 - 1359)/1431 = 5.0% in contact pressure.
- Comparing the conical cone bearing of FIG. 17C with the ball bearing of FIG. 17D, the embodiment of FIG. 17C provides a decrease of (811 - 637)/811 = 21.4% in stress and a decrease of (1628 - 1359)/1628 = 16.5% in contact pressure.

An embodiment of the present invention uses all hardened kinematic contacts. Typically hardened, tempered and polished 440C bearing steel and polished sapphire contacts that are virtually resistant to wear and have very low contact friction, but any bearing material could be used. If needed, hard wear-resistant coatings such as nickel could be added to the surface according to an embodiment. However other materials such as hard and tough ceramics could also be used. For more cost sensitive designs, an embodiment of the present invention can lower the contact pressure enough to allow other metals to the used without surface failure, when paired with the appropriate payload.

An embodiment of the present invention allows for a smaller bearing to be used in either a fixed location on affixed to an actuator. The conical ball cone bearing according to an embodiment can be mounted to an adjuster or be fixed as shown in FIGS. 9 and 10. As can be seen in the figures the actuator is separate from the adjuster allowing the adjuster to be made from a material that will support the best fine adjuster thread proprieties and the conical ball cone head is made from a material that will support the best high load and low friction proprieties according to an embodiment. The conical ball cone head according to an embodiment can also be pressed into place to support the best adjuster to bearing concentricity, or located within the adjuster using precision tolerance bearing surfaces allowing free rotation. The pressed into place or glued into place bearing will rotate with the adjuster transferring torque to the kinematic contacts. The insertion of the bearing into the adjuster cylinder using precision tolerance bearing surfaces will significantly reduce the felt adjuster torque, producing a very smooth adjuster, and also significantly reduce the transfer of torque to the kinematic contacts. The lower friction in this type of bearing also improves beam point stability over all conditions such as thermal shock, mechanical shock, vibration, etc. The conical ball cone bearing according to an embodiment can also be placed directly into the adjuster frame allowing it to be fixed, as shown below in FIG. 11. This can be done in one, two and three locations depending on the kinematic design intent.

The adjuster can be actuated using a fine pitch thread, a piezoelectric actuator, a hydraulic cylinder, a pneumatic cylinder, a voice coil, etc. A hybrid fine thread adjuster actuator with nested piezoelectric actuator cylinder is also shown in FIGS. 12-14.

The conical ball cone bearing according to an embodiment of the present invention can have a higher load and lower friction configuration. The higher load was achieved at the expense of size "larger overhang" but has the same angular translation as embodiments shown above in FIGS. 2 and 9 - 14. Note that the designs in FIG. 2 and FIG. 3 have the same angular translation, but the design shown in FIG. 3 can support a higher load. This can be seen from the FEA analysis for the specific embodiments as discussed above.

The conical ball cone bearing according to an embodiment can have a maximized translation configuration. This option can have an overhanging ball bearing or a conical ball cone head with a less pronounced cone profile allowing for greater angular translation at the expense of either size or load carrying capacity. If a large translation is needed a less pronounced conical ball cone bearing as shown in FIG. 3 would be used. If a full angular translation beyond the center of the adjuster axis is needed the overhanging ball bearing as shown in FIG. 4 would be used.

The various bearings according to embodiments of the present invention discussed above have the following advantages:
a) They solve the problems that previously prevented a kinematic system to be both compact and also have a large payload.
b) The beam pointing stability of a kinematic system using these bearings is significantly improved.
c) The kinematic movement of a kinematic system using these bearings is significantly improved.
d) A kinematic system using these bearings can withstand significantly larger shock and vibration forces before bearing surface damage occurs.
e) They allow lower cost materials to perform as good as higher cost materials.
f) They allow mounting a bearing at the end of an actuated adjuster cylinder.
g) They allow mounting a bearing at the end of an actuated adjuster cylinder that can isolate any torque from being translated to the actuator.
h) They allow mounting a bearing at the end of an actuated adjuster cylinder, allowing smooth and free translation within the cylinder stroke axial direction.
i) They allow a monolithic high load bearing, thrust bearing and axial translation piston bearing all in one monolithic package.

While the present invention has been described at some length and with some particularity with respect to the several described embodiments, it is not intended that it should be limited to any such particulars or embodiments or any particular embodiment, but it is to be construed so as to provide the broadest possible interpretation in view of the prior art and, therefore, to effectively encompass the intended scope of the invention. Furthermore, the foregoing describes the invention in terms of embodiments foreseen by the inventor for which an enabling description was available, notwithstanding that insubstantial modifications of the invention, not presently foreseen, may nonetheless represent equivalents thereto.

## Claims

1. A conical ball cone bearing, comprising:
an adjuster (220) configured to provide an axial linear translation adjustment of the conical ball cone bearing; and
a conical ball cone bearing contact tip (210) mounted on an end of the adjuster (220);
wherein a surface of the conical ball cone bearing contact tip (210) comprises a contact region (250) located between the base and apex of the conical ball cone bearing contact tip (210);
wherein the contact region (250) is configured to make contact with a corresponding contact surface (230, 240).

2. The conical ball cone bearing of claim 1, wherein the surface of the conical ball cone bearing contact tip extends beyond a body diameter of the adjuster.

3. The conical ball cone bearing of claim 1, wherein the surface of the conical ball cone bearing contact tip sits within a body diameter of the adjuster.

4. The conical ball cone bearing of claim 1, wherein the conical ball cone bearing contact tip is precision fitted to the end of the adjuster.

5. The conical ball cone bearing of claim 4, wherein the adjuster is a fine pitch adjusted.

6. The conical ball cone bearing of claim 4, wherein the adjuster is an actuated adjuster cylinder.

7. The conical ball cone bearing of claim 1, wherein the conical ball cone bearing contact tip is hardened and polished to create an optimal load bearing surface.

8. The conical ball cone bearing of claim 1, wherein a radius of the contact region is maximized to achieve the lowest Hertzian contact stress within a predetermined available area and needed translation angle.

9. The conical ball cone bearing of claim 1, wherein conical ball cone bearing contact tip comprises an expanded bearing surface beyond the adjuster body to increase the maximum axial radius and a part of the conical ball cone bearing contact tip above and/or below the contact region is removed to maximize the radial radius within a predetermined available space.

10. The conical ball cone bearing of claim 1, further comprising a vacuum vent hole in it.

11. The conical ball cone bearing of claim 1, further comprising a thrust bearing within it.
